# EUROPÄISCHE PATENTSCHRIFT

(11) **EP 2 018 639 B1**
(45) Veröffentlichungstag und Bekanntmachung des Hinweises auf die Patenterteilung: **14.09.2011**
(21) Anmeldenummer: 07722233.9
(22) Anmeldetag: 17.04.2007
(51) Int. Cl.: G06Q 30/00, G09F 27/00, G09F 19/22

(54) **STEUERUNGSSYSTEM FÜR EINE MEHRZAHL MEDIENFASSADEN**
CONTROL SYSTEM FOR A PLURALITY OF MEDIAL FAÇADES
SYSTÈME DE CONTROL POUR UNE PLURALITÉ DES FAÇADES MÉDIATIQUES

(30) Priorität: 16.05.2006 DE 102006023107; 30.05.2006 US 809375 P
(43) Veröffentlichungstag der Anmeldung: 28.01.2009
(73) Patentinhaber: Müller-Maurer, Ingrid, 53804 Much (DE)
(72) Erfinder: KRONHAGEL, Christoph, 53173 Bonn (DE); MÜLLER, Ralf, 53804 Much (DE)
(74) Vertreter: Castell, Klaus
(86) Internationale Anmeldenummer: PCT/DE2007/000675
(87) Internationale Veröffentlichungsnummer: WO 2007/131467

(56) Entgegenhaltungen:
- EP-A- 1 313 086
- WO-A-98/45830
- DE-U1- 29 802 271

## Beschreibung

Die Erfindung betrifft ein Steuerungssystem für eine Mehrzahl Anzeigevorrichtungen in Form von Medienfassaden im öffentlichen Raum mit einer die Medienfassaden steuernden EDV-Anlage.

Eine Anzeigevorrichtung mit einer flächigen Anzeige soll im Rahmen dieser Patentanmeldung insbesondere eine beleuchtete Medienfassade sein. Medienfassaden haben ihren Ursprung in beleuchteten Werbeanzeigen. Inzwischen sind auch Aufbauten bekannt, bei welchen auf einer in Pixel aufgelösten flächigen Anzeige Texte, Bilder und Videofilme dargestellt und in Folge der Lichtemission für den Betrachter sichtbar gemacht werden.

Ein elektronisches Postersystem wird von der EP 1 313 086 A1 vorgeschlagen. Dort wird ein Programm festgelegt oder auf einzelne Abfragen von Benutzern reagiert, und die entsprechend dieser beiden Abspielmöglichkeiten ausgewählten Inhalte werden wiedergegeben. Das dort beschriebene Verfahren ist somit sehr ökonomisch, denn solange nichts von einem einzelnen Empfänger individuell ein bestimmter Inhalt angefragt wird, wird immer wieder dasselbe Programm abgespielt.

Die WO 98/45830 A1 zeigt eine Medienfassade, welche mit einer dynamischen Wiedergabe Finanzinformationen anzeigt.

In der DE 298 02 271 U1 wird eine Präsentationsanlage offenbart, welche in einer regelmäßig aktualisierten Programmschleife eine abwechselnde Darstellung aller angeschlossenen Videoprogrammquellen auf den Bildflächen ermöglicht. Es wird nach definierten Zeitabständen permanent auf eine Videoprogrammquelle umgeschaltet.

Die Bespielung einer Medienfassade im öffentlichen Raum stellt den Betreiber jedoch vor besondere Herausforderungen:

So erfolgt zunächst die Wahrnehmung von bewegten Bildern im öffentlichen Raum anders als in geschlossenen Räumen. Ein Betrachter fühlt sich im öffentlichen Raum instinktiv vielen Gefahren ausgesetzt und setzt nur einen geringeren Teil seiner Wahrnehmung für die elektronisch dargestellten Bilder ein als in privaten Räumen. Daher können Bespielungen für
Medienfassaden nicht in der üblichen Art, beispielsweise wie das Abspielen eines Films in einem Kino oder einem Fernseher, erstellt werden. Vielmehr muss die erwünschte kommunikative Wirkung in sehr viel kürzerer Zeit erreicht werden.

Außerdem können Medienfassaden leicht Irritationen im Straßenverkehr hervorrufen. Verkehrspsychologisch ist es daher notwendig, dass die Bespielung einer Medienfassade kein "Story Telling" aufnimmt. Es dürfen also keine Geschichten erzählt werden, die dem Autofahrer unfreiwillig die Konzentration auf den Verkehr rauben.

Überdies kann eine Medienfassade 24 Stunden am Tag betrieben werden. Für alle Anwohner um eine solche Medienfassade kann es zu einer psychischen Belastung werden, wenn sich das Programm ständig in der gleichen Art und Weise wiederholt. Für den Betreiber der Medienfassade ist es allerdings praktisch nicht möglich, so viel Inhalt zusammenzustellen, dass dieser Eindruck vermieden werden kann.

Zusätzlich stellt sich das Problem, dass Medienfassaden oft an markanten Gebäuden aufgehängt sind und daher die Form der Medienfassade und somit auch die Form der flächigen Anzeige durch die Kontur der Gebäudefläche bestimmt werden. Ein Inhalt in graphischer Form, so beispielsweise eine Bilddatei oder eine Videodatei, liegt aber in der Regel in einem der üblichen Formate von Fernsehbildschirmen oder Computerbildschirmen vor, also im Format 4:3 oder 16:9, wobei die beiden Zahlen das Kantenverhältnis der rechteckigen Anzeigefläche angeben.

Der Erfindung liegt - insbesondere mit Blick auf EP 1 313 086 A1 - die Aufgabe zu Grunde, ein Steuerungssystem zur Verfügung zu stellen, welches es ermöglicht, dass Medienfassaden unterschiedlichster Geometrie, angepasst für den jeweiligen Aufstellort im öffentlichen Bereich, auf selbständige Art auch 24 Stunden am Tag betrieben werden können.

Diese Aufgabe wird gelöst durch ein Steuerungssystem mit den Merkmalen des Patentanspruchs 1. Optionale vorteilhafte Ausgestaltungen sind den Unteransprüchen zu entnehmen.

Begrifflich sei hierzu erläutert, dass der Inhaltepool in der Regel eine Datenbank sein kann, in welcher Textdateien, Bilddateien und/oder Videodateien, aber auch Musikdateien, vorhanden sein können. Jede Datei weist eine Kennzeichnung auf, welche zumindest den Dateityp angibt. Bevorzugt kann die Inhaltekennzeichnung vom Betreiber der Anzeigevorrichtung relativ frei eingestellt werden. So scheint insbesondere denkbar, die Inhaltekennzeichnung mit bestimmten thematischen Bereichen zu verknüpfen, wie beispielsweise bestimmte graphische Darstellungen einer Stadt oder eines Unternehmens, einer Sportveranstaltung, eines aktuellen Nachrichtenthemas und zahlloser weiterer möglicher Themenschwerpunkte jeweils eine zusammenhängende Gruppe darstellen können. Eine solche Inhaltekennzeichnung kann für den Betreiber schon dann sehr nützlich sein, wenn sie beispielsweise eine bloße Zahl beinhaltet, so beispielsweise die Nummer eines Kunden, der für Darstellungszeit auf der Anzeigevorrichtung Gebühren zahlt, oder beispielsweise der Nummer einer bestimmten Anzahl von Inhaltedateien, die gemäß einer manuellen Selektion durch den Betreiber so gekennzeichnet werden sollen, dass die Inhalteverbindungsmittel zwischen diesen logische Verknüpfungen erstellen können.

Die Inhalteverbindungsmittel sind somit in der Lage, beispielsweise zwei graphische Darstellungen miteinander logisch zu verknüpfen. Diese logische Verknüpfung wird innerhalb der EDV-Anlage, bevorzugt innerhalb zweier Komponenten der EDV-Anlage, nun an die Layoutmittel weitergegeben. Die Layoutmittel entnehmen der logischen Verknüpfung, die sie von den Inhalteverbindungsmitteln mitgeteilt bekommen, dass die beiden graphischen Darstellungen in einem Kontext zueinander stehen. Die Layoutmittel ordnen die graphischen Darstellungen dann in einem Abspielprogramm an.

Das Abspielprogramm versetzt die beiden graphischen Darstellungen zeitlich und/oder in der Anzeigenfläche gegeneinander, so dass auf der flächigen Anzeige beide graphische Darstellungen ohne Verzerrung gleichzeitig oder zeitlich versetzt für einen Betrachter erkennbar sind. Die Entscheidung, wie die Versetzung erfolgt, also zeitlich oder in der Fläche, sowie auch die dann folgende Entscheidung, um welchen Versatz die beiden Darstellungen wiedergegeben werden, kann von den Layoutmitteln insbesondere unter Gesichtspunkten der bestmöglichen Ausnutzung der Darstellungsfläche der Anzeige vorgenommen werden. Es kann allerdings auch ein Zufallsalgorithmus programmiert sein.

Es wurde bereits erläutert, dass gerade bei Anzeigen im öffentlichen Raum besondere Schwierigkeiten zu überwinden sind. Auch ist dort das Layout besonders wichtig, da öffentliche Anzeigen aufwendig in der Installation und im Unterhalt sein können. Es ist daher bei Anzeigen im öffentlichen Raum geboten, die zur Verfügung stehende Anzeigefläche bestmöglich wirtschaftlich auszunutzen.

Es wurde bereits erläutert, dass das Steuerungssystem auf eine Mehrzahl von Anzeigevorrichtungen mit jeweils einer flächigen Anzeige zugreift. Insbesondere können mindestens drei Anzeigevorrichtungen mit jeweils unterschiedlichen Kantenverhältnissen von rechteckigen Anzeigen in das System eingebunden sein.

Es wurde bereits erläutert, dass besondere Herausforderungen bei der graphischen Darstellung oft darin liegen, dass ein Bild oder ein Film auf einer Anzeige wiedergegeben werden soll, die ein anderes Kantenverhältnis hat als die Daten der graphisch wiedergebbaren Datei vorsehen. In diesem Fall sollen die Wiedergaben bevorzugt dennoch ohne Verzerrung erfolgen. Die Layoutmittel müssen hierzu eine unverzerrte Wiedergabe dadurch einleiten, dass sie die graphischen Inhalte mit einem entsprechenden Hinweis an die Anzeigevorrichtung leiten, in welcher Größe und wie positioniert auf der Anzeige die Inhalte angezeigt werden sollen.

Wenn mehrere Anzeigen mit jeweils verschiedenen Kantenverhältnissen beleuchtet werden sollen, ermöglichen es die Layoutmittel, jeweils verschiedene Layouts für die verschiedenen Anzeigen mit den Inhalten an die Anzeigevorrichtungen weiterzugeben. Auf den verschiedenen Anzeigen erscheinen dann insgesamt zwar dieselben Inhalte, allerdings im Vergleich zueinander räumlich und/oder zeitlich unterschiedlich. Mit anderen Worten ausgedrückt, erzeugen die Layoutmittel auf den verschiedenformatigen Anzeigen ein unterschiedliches Abspielprogramm, welches aber insgesamt dieselben Inhalte wiedergibt, nämlich alle diejenigen Inhalte, welche von den Inhalteverbindungsmitteln logisch verknüpft worden sind.

Eine Anzeigevorrichtung kann besonders flexibel für die Wiedergabe benutzt werden und somit auch die Layoutmittel sehr dynamisch arbeiten lassen, wenn sie ein über Bildpunkte ansteuerbares Display aufweist.

Simulationen haben gezeigt, dass sich insbesondere Anzeigen mit einer Rechteckform mit einem Kantenverhältnis von schmaler als 16:9 als sehr geeignet erweist, um mit der vorliegenden Erfindung dynamisch bespielt zu werden. Die meisten graphischen Darstellungen sind für das 4:3-Format oder das 16:9-Format vorformatiert. Bei Wiedergabe auf einer Anzeige, welche schmaler ist als das 16:9-Format, bei welcher also die lange Kantenlänge mehr als 16 Neuntel der Abmessung der kurzen Kantenlänge beträgt, ist eine solche Bild- oder Videodatei nur mit einem verbleibenden unbenutzten Teil der Anzeigefläche darstellbar, wenn die Darstellung ohne eine Verzerrung erfolgt. Dieser nicht benutzte Teil der Anzeige kann von den Layoutmitteln dazu genutzt werden, andere Inhalte anzuzeigen. Diese anderen Inhalte können gegebenenfalls zwar in der Größe verändert werden, können aber dabei ihr Kantenverhältnis behalten und somit ebenfalls ohne Verzerrung angezeigt werden. Insgesamt kann also mit schmalen Anzeigeflächen bereits von einem sehr einfachen Algorithmus die Positionierung von zwei oder mehr graphischen Darstellungen berechnet werden, wobei im einfachsten Falle eine erste graphische Darstellung in maximal möglicher Größe angezeigt wird und für weitere graphische Darstellungen die Restfläche genutzt wird. Die Restfläche kann hierarchisch auch mehreren weiteren graphischen Darstellungen gemeinsam zur Verfügung gestellt werden.

Eine bevorzugte Ausführungsform eines Steuerungssystems sieht vor, dass mehrere Anzeigevorrichtungen räumlich voneinander getrennt von einer EDV-Anlage gesteuert werden. So können die verschiedenen Anzeigevorrichtungen beispielsweise in einer Stadt über deren öffentliche Anzeigevorrichtungen verteilt sein. Alternativ und kumulativ können die Anzeigevorrichtungen auch über mehrere Städte oder Länder verteilt sein. Dennoch kann die EDV-Anlage die Inhalte miteinander verknüpfen, die in einem Abspielprogramm angezeigt werden sollen. Dies kann lokal geschehen, alternativ aber auch dezentral ausgeführt sein.

Die Layoutmittel verfügen bevorzugt über die Informationen aller Anzeigen, also insbesondere deren Anzeigekapazitäten hinsichtlich der Abmessungen und gegebenenfalls der Pixelzahlen. Die Layoutmittel können dann anhand der ihnen bekannten Daten über die Anzeigevorrichtungen und anhand der von den Inhalteverbindungsmitteln übermittelten Verknüpfungen die wiederzugebenden Inhalte zu den verschiedenen Anzeigen weiterleiten, bevorzugt in Echtzeit oder mit einem kurzen zeitlichen Versatz, um eine Pufferung zu ermöglichen.

Die jeweiligen Anzeigen werden dann als besonders wenig störend empfunden, wenn das Steuerungssystem graphische Anreicherungsmittel für die Anzeigevorrichtung aufweist. Insbesondere eine Medienfassade hat immer auch eine gestalterische Komponente in Bezug auf die Architektur des Gebäudes, an welchem sie installiert ist. Um diesen Zusammenhang sinnlich wahrnehmbar zu machen, können individuelle Programme erstellt werden, die rein künstlerisch-graphische Strukturen erstellen. Diese Strukturen können beispielsweise selbstentwickelnd sein, so dass sie sich nach einer zufälligen oder für einen unvoreingenommenen Betrachter nicht vorhersagbaren Weise weiterentwickeln. Die hierdurch erzeugten graphischen Anreicherungen werden dann bevorzugt mit den Inhalten, die die Layoutmittel zur Verfügung stellen, variabel vermischt. So kann es als angenehm empfunden werden, wenn zeitweise allein die graphischen Anreicherungen auf einer Medienfassade erscheinen, oder wenn sie mit den von den Layoutmitteln aus dem Inhaltepool weitergeleiteten Inhalten in graphische Überlagerung gebracht werden.

Bevorzugt ist die EDV-Anlage so eingerichtet, dass zumindest die graphischen Anreicherungsmittel interaktiv auf äußere Einflüsse wie Wetter oder Tageszeit reagieren können. Diese Daten können zentral von der EDV-Anlage verarbeitet werden, insbesondere dann, wenn das Beleuchtungssystem nur eine Anzeigevorrichtung bedient oder wenn die verschiedenen Anzeigevorrichtungen räumlich eng beieinander installiert sind. Wenn allerdings die verschiedenen Anzeigen über einen größeren Bereich verteilt sind, beispielsweise über ein Stadtgebiet oder über mehrere Städte, wird vorgeschlagen, dass entsprechende Sensoren und graphische Mischmittel lokal an einer Anzeigevorrichtung installiert sind. Die Mischmittel nehmen dann die von den Layoutmitteln zur Verfügung gestellten Daten auf und wandeln diese mit den Anreicherungsmitteln ab.

Bevorzugt erzeugen die Inhalteverbindungsmittel und/oder die Layoutmittel und/oder die graphischen Anreicherungsmittel ein sich ständig eigengesteuert veränderndes Programm. Dies wird insgesamt als sehr angenehm für einen Betrachter oder vor allem für einen Anwohner neben einer im öffentlichen Raum installierten Anzeige empfunden.

Das Steuerungssystem weist bevorzugt Steuermittel für den Inhaltepool, die Inhalteverbindungsmittel, die Layoutmittel und/oder die graphischen Anreicherungsmittel auf. Dabei können Steuermittel für den Inhaltepool insbesondere Zugriffsmittel auf die dortige Datenbank sein, mit denen ein Betreiber einer Anzeigevorrichtung die vorhandenen Inhalte selektiv löschen und/oder neue Inhalte hinzufügen kann. Auch sollten die Steuermittel für den Inhaltepool die Möglichkeit eröffnen, die Inhaltekennzeichnungen für die Inhalte einzugeben.

Die Steuermittel für die Inhalteverbindungsmittel können dazu benutzt werden, die vorhandenen Inhalte mit deren jeweiligen Inhaltekennzeichnungen auf verschiedene Arten logisch miteinander zu verknüpfen. Beispielsweise können in diesen Steuermitteln auch übergreifende Verknüpfungen ermöglicht werden, so die Inhalte einer ersten Kategorie mit den Inhalten einer zweiten Kategorie. Vor allem sollten es die Steuermittel den Inhalteverbindungsmitteln ermöglichen, auch ohne den Umweg über den Inhaltepool graphisch oder akustisch wiedergebbare Daten direkt zu den Layoutmitteln und somit zu den Anzeigen zu bringen. Dies kann beispielsweise für ein schnelles Einpflegen einer aktuellen Nachrichtenmeldung genutzt werden.

Die Steuermittel für die Layoutmittel können insbesondere eine andere zeitliche Abfolge vorgeben und hierdurch die Beleuchtungen träger oder dynamischer ein- und ausschalten lassen. Alternativ und kumulativ können sie dazu genutzt werden, die bevorzugte Anzahl von gleichzeitig darzustellenden graphischen Inhalten an einem Display festzulegen. So können die Layoutmittel bei einer erhöhten Anzahl von gleichzeitig anzuzeigenden graphischen Darstellungen der Inhalte im Mittel eine stärkere Verkleinerung der Inhalte bewirken, bevorzugt ohne graphische Verzerrung.

Bevorzugt ist das Steuerungssystem so eingerichtet, dass die Inhalte als arrangierte Inhalte in Form von unterschiedlichen graphischen Ebenen zur Anzeigevorrichtung übertragen werden.

Als graphische Ebenen werden unterschiedliche graphische Darstellungen bezeichnet, welche von den Layoutmitteln an der Anzeigevorrichtung in gegenseitiger Überlappung zur Anzeige gebracht werden können.

Die einzelnen Ebenen können halbtransparent sein, so dass dort, wo eine oben liegende Ebene gerade keine Anzeigenbeleuchtung hervorruft, eine darunter liegende Ebene dargestellt wird.

Es wird vorgeschlagen, dass jede Inhaltekennzeichnung einen Profildatensatz aufweist, der zu einer vorgegebenen Anzahl an Eigenschaften jeweils eine Relevanz beschreibt.

So ist beispielsweise denkbar, allen Inhaltsdaten - ob Text, Video oder Grafik - jeweils ein solches Profiling zuzuweisen. Alle Daten werden in einzelne Modulbausteine separiert und individuell mit einem Profil versehen. Damit werden dem Modul beliebig viele Eigenschaften zugeordnet, welche das Modul deutlich beschreiben. Für jedes Projekt eines Betreibers eines Steuerungssystems wird ein Kanon von Eigenschaften definiert, mit welchem alle Medienmodule dieses Projektes beschrieben werden.

In einem Prototypmodell des Erfinders wird mit sechs Eigenschaften gearbeitet. Es wird individuell eingestellt, wie sehr eine jeweilige Eigenschaft als Beschreibung jedes einzelnen Moduls zutrifft. Dazu kann in einem Steuerprogramm der Pegel der Ausprägung von "nicht zutreffend" bis "voll zutreffend" eingestellt werden. Jedes Modul wird somit mit einem individuellen Mix an verschieden eingestellten Pegeln, also schwächer oder stärker in den vorbestimmten Eigenschaften, eingerichtet und abgespeichert.

Ein Steuerprogramm im Logic-Center dient dazu, dass sich Module mit ähnlichen Eigenschaften finden und gemeinsam auf dem bildgebenden Medium erscheinen können. Die Verbindung der Module miteinander kann sowohl die zeitlich-lineare Abfolge der Module organisieren als auch die Module in zeitgleiche Überlagerung setzen.

Somit ersetzt das vorgestellte System die Funktion des klassischen Videoschnittes. Der Videoschnitt erfolgt nun prozessual und wird online im Steuerungssystem errechnet.

Zum Kombinieren der einzelnen Inhalte wird - mit anderen Worten beschrieben - ein n-dimensionaler Raum aufgebaut, und zwar entsprechend der Anzahl der Eigenschaften im Profiling. In dem beschriebenen Prototypsystem ist dies ein sechsdimensionaler Raum, und die einzelnen Module haben eine sechs-dimensionale Ausrichtung. Das System organisiert die Inhaltedaten so, dass sich Module mit ähnlicher Ausrichtung gegenseitig finden.

Selbstverständlich sind auch andere Regeln definierbar, beispielsweise dass sich nur Module, welche sich möglichst wenig ähnlich sind, finden und zusammengeschaltet werden.

Der n-dimensionale Datenraum wird bevorzugt in verschiedene Cluster unterteilt. Damit sind thematische Einteilungen des Datenraums möglich. Nach individuell bestimmbaren Regeln springt die aktuelle Bespielung zwischen diesen Clustern hin und her.

Wenn ausschließlich die vorstehend beschriebene Programmierung vorliegt, treffen die Module noch relativ unkontrolliert aufeinander. Deswegen wird vorgeschlagen, dass das Beleuchtungssystem eine Reihe von Tools aufweist, mit welchen die Abstimmung der Medienmodule aufeinander gestaltet werden kann:

Zunächst sei an eine "Content Machine" gedacht.

Im Gesamtsystem können verschiedene Pools mit Inhalten unterschiedlicher Mentalität eingerichtet werden. Innerhalb dieser Pools können die Medienmodule unterschiedliche Erscheinungsformen haben. Das Ziel ist es, möglichst viel Abwechslung in die Bespielung integrieren zu können. Hierzu wurde eine Steuerung entwickelt, mit welcher in einer ständig neuen Reihenfolge auf die verschiedenen Medienmodule zugegriffen wird.

In Form einer Uhr werden graphische Zonen eingesetzt, die den Zugriff auf ein bestimmtes Kontingent Medienmodule definieren. Diese Zonen drehen sich um den Mittelpunkt der "Content Machine". Sie hat an einer bestimmten Stelle einen Cursor, welcher registriert, welche Zone gerade in wessen Bereich aktuell ist. Dies gibt dem Steuerungssystem das Signal, genau aus diesem Kontingent ein Medienmodul auszusuchen.

Die graphischen Zonen können beliebiger Größe und beliebiger Anzahl eingerichtet werden. Von Vorteil ist, wenn auch die Geschwindigkeiten der einzelnen Zonen unterschiedlich eingerichtet werden können. Hierdurch verschieben sich die Zonen innerhalb der "Content Machine" gegeneinander. Der Zugriff auf die verschiedenen Medienkontingente wird ständig neu organisiert, womit Wiederholungen vermieden werden.

Mehrere Content Machines können miteinander in Verbindung gestellt werden, indem sie in hierarchischer Ordnung organisiert werden. Die jeweils höher stehende Content Machine zeigt zu irgendeinem Zeitpunkt einen leeren Bereich auf, wenn sich die Zonen, also vor allem Kreissegmente, entsprechend gedreht haben. Dieser leere Bereich signalisiert dann die Aktivierung der nächsten Content Machine. So werden unterschiedliche Content Pools prozessual miteinander vermischt.

Als ein weiteres Tool sei an "Graphic Tool" gedacht.

So sollen verschiedene Tools vorhanden sein, mit denen die Erscheinung der Medienmodule gestaltet werden können. Z. B. kann ein Text in seiner Größe, Farbe und Position eingerichtet werden. Auch kann bestimmt werden, ob der Text von rechts oder links in das Bild hinein läuft, oder ob er einfach erscheint.

Auch die Art des Auftauchens von Bildern und Videos kann eingestellt werden. So können sie insbesondere ein- und ausgeblendet werden.

Wenn mehrere Bilder gleichzeitig erscheinen, werden bevorzugt Ebenenfunktionen aktiviert, welche bestimmen, in welcher Form sich die Bilder überlagern. Dadurch sind praktisch unbegrenzte Gestaltungsmöglichkeiten gegeben.

Grundsätzlich können hierüber auch special effects eingestellt werden, die gestalterischen Einfluss auf alle Medienmodule haben.

Als ein drittes Tools sei an einen "Content Mixer" gedacht.

Dies ist bervorzugt für das Inhaltemanagement gedacht, welches authoritär über die prozessuale Steuerung des Steuerungssystems gestellt ist und welches eine exakt bestimmte Einspielung zu bestimmten Uhrzeiten organisieren kann. Damit können bestimmte Einspielungen auf der Medienfassade garantiert werden.

Bevorzugt weist das Steuerungssystem Protokollmittel auf, welche Einspielungen von Inhalten protokollieren.

Angesichts der weitgehenden Zufälligkeit oder zumindest nur komplizierten Vorhersagbarkeit der Einspielungen von Inhalten auf den Anzeigevorrichtungen können die Protokollmittel vorteilhaft exakt erfassen, wann und wie lange ein bestimmtes Medienmodul eingespielt wurde. Damit sind Werbeeinspielungen abrechenbar und ebenso nach einem vorgegebenen Budget einstellbar.

Das gesteuerte Steuerungssystem kann durch das Profiling auch intelligente Verbindungen einrichten, was den Wert der jeweiligen Werbeeinspielung erhöht. Z. B. kann ein Markenzeichen/Brand genau dann eingespielt werden, wenn unmittelbar vorher eine Information zu einem bestimmten Event in einer Stadt gelaufen ist, welche mit der Marketing-Zielgruppe des Markenzeichens korreliert. Die Information zum Kulturevent erhöht die Aufmerksamkeit der Betrachter, und so kann die Werbung sehr effizient platziert werden. Information und Werbung interagieren miteinander.

Es ist ohne weiteres möglich, dass das Steuerungssystem eine automatische dramaturgische Verteilung des Contents über den Tag organisiert. So kann beispielsweise eingestellt werden, wann im Laufe des Tages eine eher ruhige oder eher wann eine lebendige Bespielung erscheinen soll. Dies begünstigt die Genehmigungsfähigkeit von Medienfassaden, weil die Städte ihre Bürger vor Reizüberflutung im öffentlichen Raum schützen müssen.

Das gesteuerte Steuerungssystem kann die visuelle Intensität individuell auf den Ort und auf die Tageszeit einstellen. Der Stadt gibt dies die Möglichkeit, über eine Gestaltungssatzung Stadtbereiche mit definierten Intensitätsstufen für elektronische Medien auszuweisen. Dies wird höchst relevant, wenn sich eine gewisse Dichte an Medienfassaden in den Städten entwickelt hat. Dann wird es auch notwendig werden, die Bespielung der Medienfassaden gestalterisch und inhaltlich miteinander in Beziehung zu setzen, denn wenn viele Medienfassaden in unmittelbarer Nähe zueinander unkontrolliert spielen, entsteht ein "weißes Rauschen", der Betrachter könnte also vor lauter Bilderwelten keine Medienfassade mehr gezielt wahrnehmen.

Das hier vorgestellte gesteuerte Steuerungssystem für Medienfassaden kann demgegenüber eine wohl dosierte Dramaturgie der Medienfassaden zueinander entwickeln und beispielsweise bewusst kontrollierte Bespielungspausen vorschreiben.

Das gesteuerte Steuerungssystem kann eine weitere interaktive Steuerung einbinden, welche äußere Einflüsse wie Wetter und Tageslicht einbezieht. Diese Interaktivität kann wiederum zur Steigerung der Attraktivität genutzt werden. Z. B. kann die Ampelphase einer gegenüberliegenden Kreuzung erfasst werden, um genau beim Stillstand der Fahrzeuge bestimmten Content einzuspielen. Damit kann wiederum Werbezeit relativ teuer verkauft werden.

Auch mit anderen Worten sei nochmals erläutert, dass das hier vorgestellte gesteuerte Steuerungssystem ein völlig neues Medienformat begründet. Die visuelle Ästhetik ist in erster Linie auf die Momentaufnahme abgestimmt, nicht - wie bisher - auf die narrative Vermittlung von Ideen. Die Konzentration auf den Moment mit der Ausrichtung auf eine sich ständig wandelnde Bildfolgenstruktur ermöglicht eine harmonische Integration der bewegten Bilder in urbane Räume. Auch die redaktionelle Vermittlung von Informationen wird durch das gesteuerte Steuerungssystem auf die Aufnahmefähigkeit der Empfänger eingestellt.

Damit wird auch eine neue Aufstellung von Werbung in öffentlichen Räumen angeregt. Mit dem vorgestellten Steuerungssystem ist nicht mehr der vorgefertigte Werbeclip gefragt, sondern die Schaffung eines hochkomplexen Systems, welches Bilder und Aussagen in ständig neue Konstellationen stellt. Der Videoschnitt wird durch eine intelligente Schnittstellenarbeit abgelöst, die sich durch ein programmiertes Regelwerk definiert.

Der Betrachter einer Medienfassade gleicht seine Wahrnehmung unbewusst mit seinen Sehgewohnheiten beim Fernsehen ab. Daher erwartet er eine redaktionelle Gestaltung des Programms. Dieser Aufwand ist aber für Medienfassaden nicht wirtschaftlich vertretbar. Somit entsteht bei einer traditionell betriebenen Bespielung einer Medienfassade schnell ein gewisses Maß an Frustration und Desinteresse, weil die Erwartungshaltung des Empfängers nicht bestätigt wird. Dies hat Auswirkungen auf die Wirtschaftlichkeit herkömmlicher Medienfassaden, wenn diese dem Eigentümer durch Werbeeinspielungen einen wirtschaftlichen Profit bringen sollen. Werbung auf Medienfassaden wird sich im Markt nach der Vorstellung des Erfinders durchsetzen können, wenn sie auf die vorbeschriebene Weise mit Hilfe eines gesteuerten Steuerungssystems erfolgreiche Effekte produziert.

Das gesteuerte Steuerungssystem ermöglicht es, der Werbung eine neue Ausrichtung zu geben. Nur durch das gesteuerte Steuerungssystem der hier vorgeschlagenen Art kann Werbung mit anderem Content wie Infotainment und Medienkunst in einer organischen Überlagerung auf einer Medienfassade organisiert werden. Durch diese neue Ästhetik entsteht eine neue Attraktivität. Erst dadurch kann der Markt der elektronischen Medien im öffentlichen Raum nachhaltig erschlossen werden.

Insgesamt ermöglicht ein solches gesteuertes Steuerungssystem somit, die Inhalte von Bilddateien, Videodateien, Musikdateien und Textdateien auf eine solche Weise an einer oder mehreren Anzeigeflächen wiederzugeben, dass das Wiedergabeprogramm als nicht störend empfunden wird. Durch die Verwendung eines solchen Systems zum Steuern der Anzeigen wird also ein universell einsetzbares Abspielprogramm für den Betreiber eines solchen Steuerungssystems ermöglicht.

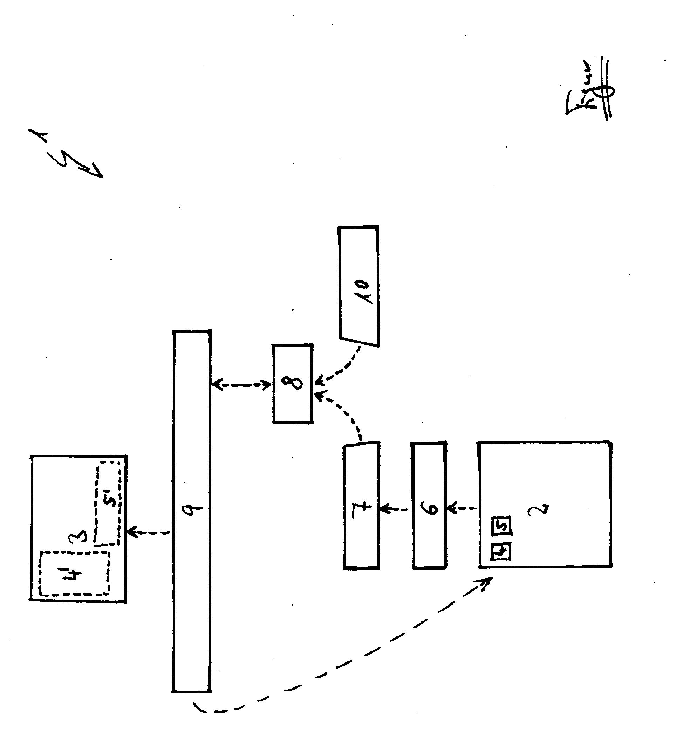

Die Erfindung wird nachfolgend anhand eines Ausführungsbeispiels unter Bezugnahme auf die Zeichnung näher erläutert.

Es zeigt
- die einzige Figur: schematisch ein gesteuertes Steuerungssystem mit einer Anzeige, die aus einem Inhaltepool variabel gespeist wird.

Im Steuerungssystem 1 ist zunächst eine große Datenbank vorgesehen, nämlich der Inhaltepool 2. Der Inhaltepool 2 ist Grundlage des gesamten Bespielprogramms einer großen Medienfassade 3, welche mit Abmessungen von etwa 20 m Breite und etwa 100 m Höhe an einer vertikalen Gebäudefassade installiert ist.

Der Inhaltepool 2 ist ein Server, auf welchem Videoclips, Graphiken und Textbausteine gespeichert sind. Die Dateien für die Inhalte sind in verschiedenen Gruppen dort gespeichert, insbesondere weist aber jede Inhaltedatei (exemplarisch mit 4, 5 gekennzeichnet) eine individuelle Kennzeichnung auf, welche die inhaltlichen Eigenschaften der einzelnen Datei nach bestimmten Kriterien wiedergibt. Die Eigenschaften beinhalten insbesondere Informationen über die Abmessung eines Bildes in Pixeln, über die Laufzeit eines Videoclips, über den thematischen Inhalt und über den Kunden des Betreibers, der den Inhalt an den Betreiber übermittelt und für die Wiedergabe Gebühren gezahlt hat.

Der Inhaltepool 2 ist Teil einer EDV-Anlage. Ein weiterer Teil der EDV-Anlage ist ein Prozessor, welcher in einem logischen Baustein, dem "Logic Center" 6, angeordnet ist und Zugriff auf den Inhaltepool 2 und die dortigen Inhalte 4, 5 hat. Das Logic Center 6 kann, je nach lokalen Gegebenheiten, in Baueinheit mit dem Inhaltepool 2 oder hiervon separat ausgeführt werden.

Im Logic Center 6 werden die Inhalte 4, 5 aus dem Inhaltepool 2 über die Inhaltekennzeichnungen miteinander in Verbindung gebracht. Somit kann nun automatisch beispielsweise ein Videoclip sinnvoll in Beziehung zu einer Graphik und/oder einer Textaussage gestellt werden. Eine logische Verknüpfung, welche das Logic Center 6 zwischen zwei Inhalten 4, 5 festgestellt hat, wird vom Logic Center 6 an das "Graphic Center" 7 weitergeleitet.

Das Graphic Center 7 erstellt das Layout der beiden auf dem Display 3 anzuzeigenden Dateien 4, 5 und stellt diese hierzu zu einer geordneten Graphik zusammen. Dabei berücksichtigt es die geometrischen Abmessungen und die Pixelauflösung der Anzeigefläche 3.

Das Graphic Center 7 greift über das Logic Center 6, oder wahlweise direkt, auf die Inhalte 4, 5 aus dem Inhaltepool 2 zu und leitet diese zu einer geordneten Graphik arrangiert an einen graphischen Mischer 8 weiter. Der graphische Mischer 8 gibt die Daten an die Anzeige 3 entweder über eine Informationstechnologie-Plattform 9 oder auf direktem Weg weiter. Dort werden die Inhalte 4, 5 als arrangierte Inhalte 4', 5' wiedergegeben.

Eine graphische Anreicherung erhält die Anzeige der arrangierten Inhalte 4', 5' aus einem Programm 10, welches sich selbst kontinuierlich veränderliche künstlerische Graphiken erzeugt. Dabei kann der Prozessor 10 mit verschiedenen Sensoren ausgestattet sein und beispielsweise auf die Tageszeit, die Temperatur oder die aktuelle Niederschlagsmenge reagieren.

Die interaktive Medienpool-Plattform 9 baut die Bespielung für die Medienfassade 3 so auf, dass sich das Programm ständig automatisch verändert. Verschiedene Medienebenen werden dazu variabel computergesteuert in Überlagerung gebracht. Die Bedienungsplattform 9 dient als Schnittstelle zwischen der EDV-Anlage und dem Betreiber der Medienfassade 3. Der Betreiber kann neue Daten in den Inhaltepool 2 beliebig einpflegen. Außerdem hat er die Möglichkeit, unabhängig vom Inhaltepool 2, direkt aktuelle Daten zur Anzeige auf der Medienfassade 3 einzurichten.

Die Plattform 9 weist außerdem Einstellmöglichkeiten auf, mit welchen die Abstimmungen im Logic Center 6 und im Graphic Center 7 individuell justiert werden können. Das System 1 ermöglicht es, auch verschiedene Medienfassaden zu bespielen.

Generell baut das gesteuerte Steuerungssystem die Bespielung für die Medienfassaden so auf, dass sich das Programm ständig eigenständig verändert. Verschiedene Medienebenen werden dazu auf eine variable Art und Weise computergesteuert in Überlagerung gebracht.

Grundlage dafür ist der Content Pool. Dies ist ein Server, auf welchem Videoclips, Graphiken und Textbausteine gespeichert sind. Damit werden sehr kleine Medienmodule geschaffen, die jeweils für sich allein gesehen nicht aussagefähig sind.

Die einzelnen Dateien werden mit einem individuellen Profiling versehen, welches die inhaltlichen Eigenschaften der einzelnen Dateien beschreibt. Jede Datei erhält somit gewissermaßen einen eigenen Charakter.

Im Logic-Center werden nun die Dateien anhand der Eigenschaften der Medienmodule miteinander in Verbindung gebracht. Der Rechner sucht innerhalb eines individuellen Regelsystems nach Dateien, die sich ähnlich sind. Somit wird nun automatisch ein Videoclip sinnvoll in Beziehung zu einer Graphik und einer Textaussage gestellt.

Die Performance auf dem bildgebenden Medium, also beispielsweise der Medienfassade, wird online durch den Server berechnet. Es gibt keine lineare Struktur in der Bespielung, sondern sie entsteht organisch und immer neu durch die prozessuale Steuerung.

Die Dateien werden anschließend im Graphik-Center auf der Fläche der Medienfassade in einer geordneten Graphik zusammengestellt. Es werden dort Regeln definiert, die das graphische Erscheinungsbild der einzelnen Medienmodule variabel einrichten. Dabei wird beispielsweise geregelt, wie Schrift dargestellt wird und wie sie im Verhältnis zu einem dahinter liegenden Bild erscheinen darf oder soll.

Zu dem Content Pool gibt es ein Interface in Form einer Benutzerplattform, mit welcher der Provider der Medienfassade individuell Daten in den Content Pool einpflegen kann. Außerdem hat er die Möglichkeit, mit dem Content Pool direkt aktuelle Daten einzurichten und/oder das Regelwerk im Programm zu ändern.

Insgesamt ergibt sich somit ein fünfstufiges Steuerungssystem, nämlich mit dem Content Pool, dem Logic Center, dem Graphic Center, der Software-Plattform und der Medienfassade.

Im Contentserver sind die Videoclips, Graphiken und Textbausteine jeweils mit ihrem Profil abgespeichert. Es können auf dem Contentserver unterschiedliche Contentpools vorhanden sein.

Das Logic Center verknüpft anhand der Profile die Mediendaten und greift auch auf Content Machines zu, welche die Inhalte miteinander vermischen. Anhand der Content Machines kann auf die unterschiedlichen Contentpools im Content Server zurückgegriffen werden.

Die Software-Plattform ermöglicht ein individuelles Planen der Medienbespielung. So ist beispielsweise ein frei programmierbarer Content-Mixer für den Betreiber verfügbar. Außerdem ist eine Schnittstelle vorhanden, welche auf den Contentserver zugreifen kann, um von dort die Inhalte abzurufen und/oder um aktuell eingepflegte Medienmodule dort zu speichern.

Das System 1 ermöglicht es, auch verschiedene Medienfassaden 3 mit unterschiedlichen Abmessungen miteinander gemeinsam zu bespielen. Dies ist besonders vorteilhaft, wenn in einem städtebaulichen architektonischen Kontext Medienfassaden miteinander inhaltlich synchronisiert werden sollen. Ohne eine solche Synchronisierung besteht die Gefahr, dass sich die visuelle Wirkung mehrerer Fassaden gegenseitig aufhebt.

Insgesamt wird durch ein System der dargestellten Art eine Bespielungskultur für im öffentlichen Raum installierte Anzeigen, insbesondere Medienfassaden, erreicht, die ein neuartiges Medienformat aufbaut. Unter anderem ermöglicht es das System, auch Werbung für Medienfassaden zu erfassen und so einzurichten, dass die Systeme bei den Städten und Kommunen in den öffentlichen Verkehrsräumen genehmigungsfähig angemeldet werden können.

## Patentansprüche

1. Steuerungssystem (1) für eine Mehrzahl Anzeigevorrichtungen in Form von Medienfassaden (3) im öffentlichen Raum und mit einer die Medienfassaden (3) steuernden EDV-Anlage,
wobei das Steuerungssystem (1) Zugriff auf einen Inhaltepool (2) hat und dazu eingerichtet ist, die Medienfassaden (3) mit Inhalten (4,5) aus dem Inhaltepool (2) zu speisen,
wobei der Inhaltepool (2) eine Datenbank ist, in welcher Inhalte (4, 5) in Form von Text-, Bild-, Video- und Musikdateien sowie zugehörige Inhaltekennzeichnungen gespeichert sind, wobei jede Inhaltekennzeichnung mit thematischen Bereichen verknüpft ist, und wobei das Steuerungssystem (1) mittels Inhalteverbindungsmitteln (6) dazu eingerichtet ist, logische Verknüpfungen zwischen denjenigen mit den Inhaltekennzeichnungen versehenen Inhalten (4, 5) herzustellen, die in einem inhaltlichen Kontext zueinander stehen,
wobei das Steuerungssystem (1) Layoutmittel (7) aufweist, an welche die logischen Verknüpfungen weitergegeben werden,
und wobei die Layoutmittel (7) dazu eingerichtet sind, die verknüpften Inhalte (4, 5) dergestalt zeitlich und/oder geometrisch anzuordnen, dass diese an den (3) Medienfassaden über die Beleuchtung dargestellt (4', 5') werden,
und zwar bei Medienfassaden (3) mit unterschiedlichen Kantenverhältnissen mit einem unterschiedlichen Abspielprogramm, also mit denselben Inhalten, aber im Vergleich zueinander räumlich und/oder zeitlich versetzt.

2. Steuerungssystem nach Anspruch 1, ***gekennzeichnet durch*** Anreicherungsmittel (10) für die Medienfassaden (3), wobei die Anreicherungsmittel (10) rein künstlerisch-graphische Strukturen erstellen, die mit den Inhalten (4, 5) vermischt werden, wobei bevorzugt zeitweise allein die künstlerisch-graphischen Strukturen angezeigt werden.

3. Steuerungssystem nach Anspruch 2, ***dadurch gekennzeichnet*, *dass*** die Anreicherungsmittel (10) mit lokal an den Medienfassaden (3) angeordneten Sensoren verbunden sind, sodass sie interaktiv auf äußere Einflüsse wie Wetter oder Tageszeit reagieren können.

4. Steuerungssystem nach einem der vorstehenden Ansprüche, ***dadurch gekennzeichnet, dass*** die Inhalteverbindungsmittel (6) und/oder die Layoutmittel (7) ein sich ständig veränderndes Programm aus arrangierten Inhalten (4', 5') für die Anzeigevorrichtung (3) erzeugen, und zwar eigengesteuert.

5. Steuerungssystem nach einem der vorstehenden Ansprüche, ***dadurch gekennzeichnet*, *dass*** Steuermittel (9) für die Layoutmittel (7) vorgesehen sind, sodass eine bevorzugte Anzahl von gleichzeitig darzustellenden graphischen Inhalten an einer Medienfassade festgelegt werden kann, bevorzugt tageszeitabhängig.

6. Steuerungssystem nach einem der vorstehenden Ansprüche, ***dadurch gekennzeichnet*, *dass*** das jede Inhaltekennzeichnung einen Profildatensatz aufweist, der zu einer vorgegebenen Anzahl an Eigenschaften jeweils eine Relevanz beschreibt.

7. Steuerungssystem nach einem der vorhergehenden Ansprüche, ***gekennzeichnet durch*** Protokollmittel, die Einspielungen von Inhalten (4, 5) protokollieren.

## Claims

1. A control system (1) for a plurality of displays in the form of media facades (3) in public spaces and with EDP equipment controlling the media facade (3),
the control system (1) having access to a contents pool (2) and is set for supplying the media façade (3) with contents (4, 5) from the contents pool (2),
the contents pool (2) being a database in which contents (4, 5) are stored in the form of text, image, video and music files as well as corresponding content identifications, each content identification being linked to themes and the control system (1) being setup for establishing logical links by means of content combination means (6) between those contents (4, 5) equipped with content identifications that are in contextual relation with each other
the control system (1) having layout means (7) to which the logical links are relayed, and the layout means (7) being setup for disposing the linked contents (4, 5) in such a chronological and/ or geometric manner that they are displayed (4', 5') on the media façade (3) via the illumination,
namely, with media facades (3) having varying angle conditions, via a different playback software, with the same contents but chronologically and spatially offset relative to each other.

2. The control system according to claim 1, ***characterized by*** enhancement means (10) for the media façade (3), the enhancement means (10) generating mere artistical-graphical structures that are mixed with the contents (4, 5), the artistical-graphical structures being preferably occasionally displayed alone.

3. The control system according to claim 2, ***characterized in that*** the enhancement means (10) are connected to sensors disposed locally on the media façades (3), so that they can react interactively to external influences such as weather or time of day.

4. The control system according to one of the afore-mentioned claims, ***characterized in* that** the content combination means (6) and/or the layout means (7) generate in a self-controlled manner a constantly changing program of arranged contents (4', 5') for the display (3).

5. The control system according to one of the afore-mentioned claims, ***characterized in* that** control means (9) are provided for the layout means (7), so that a preferred number of graphical contents to be displayed simultaneously on a media façade can be determined, preferably depending on the time of day.

6. The control system according to one of the afore-mentioned claims, ***characterized in that*** each content identification has a profile dataset each describing a relevance to a determined number of characteristics.

7. The control system according to one of the afore-mentioned claims, ***characterized by*** logging means which log the display of contents (4, 5).

## Revendications

1. Système de commande (1) pour une pluralité de dispositifs d'affichage sous forme de média façades (3) dans l'espace public et avec un calculateur électronique commandant les média façades (3),
le système de commande (1) ayant accès à un pool de contenus (2) et est installé afin d'alimenter les média façades (3) avec des contenus (4, 5) provenant du pool de contenus (2),
le pool de contenus (2) étant une base de données dans laquelle des contenus (4, 5) ainsi que des identificateurs de contenu correspondants sont stockés sous forme de fichiers texte, de fichiers d'images, de fichiers vidéo et de fichiers musique, chaque identificateur de contenu étant liés à un thème et le système de commande (1) étant installé en vue d'établir, à l'aide de moyens de liaison de contenus (6), des opérations logiques entre les contenus (4, 5) dotés d'identificateurs de contenus et appartenant au même contexte,
le système de commande (1) comportant des dispositifs de mise en page (7) auxquels sont transmises les opérations logiques,
et les dispositifs de mise en page (7) étant installés afin d'agencer chronologiquement et/ou géométriquement les contenus liés (4, 5) de manière à ce qu'ils soient affichés (4', 5') sur les média façades (3) via l'éclairage,
et ce dans le cas de média façades (3) avec des conditions différentes en termes d'arêtes, via un programme de lecture différent, c'est-à-dire avec les mêmes contenus mais en décalage spatial et/ou chronologique les uns par rapport aux autres.

2. Système de commande selon la revendication 1, ***caractérisé par*** des moyens d'enrichissement (10) pour la média façade (3), les moyens d'enrichissement (10) générant des structures artistico-graphiques qui sont mélangées avec les contenus (4, 5), les structures artistico-graphiques étant de préférence périodiquement affichées seules.

3. Système de commande selon la revendication 2, ***caractérisé en ce que*** les moyens d'enrichissement (10) sont connectés à des détecteurs disposés localement sur les média façades (3) afin qu'ils puissent réagir interactivement à des influences extérieures telles que la météo ou l'heure.

4. Système de commande selon l'une quelconque des revendications précédentes, ***caractérisé en ce que*** les moyens de liaison de contenus (6) et/ou les dispositifs de mise en page (7) génèrent automatiquement un programme constamment changeant de contenus (4', 5') arrangés pour le dispositif d'affichage (3).

5. Système de commande selon l'une quelconque des revendications précédentes, ***caractérisé en ce que*** des moyens de commande (9) sont prévus pour les dispositifs de mise en page (7) afin de pouvoir déterminer un nombre préféré de contenus graphiques devant être affichés simultanément sur une média façade, de préférence en fonction de l'heure.

6. Système de commande selon l'une quelconque des revendications précédentes, ***caractérisé en* ce *que*** chaque identificateur de contenu comporte un ensemble de données de profil décrivant chacun une pertinence concernant un nombre déterminé de caractéristiques.

7. Système de commande selon l'une quelconque des revendications précédentes, ***caractérisé par*** des moyens de journalisation qui enregistrent les lectures de contenus (4, 5).
